Europäisches Patentamt

(19) European Patent Office

Office européen des brevets

(11) Veröffentlichungsnummer: **0 037 487**
**B1**

(12) **EUROPÄISCHE PATENTSCHRIFT**

(45) Veröffentlichungstag der Patentschrift:
**27.12.84**

(51) Int. Cl.³: **G 11 B 27/00**, G 11 B 5/09

(21) Anmeldenummer: **81101997.5**

(22) Anmeldetag: **18.03.81**

(54) **Verfahren und Gerät zum Auffinden eines Speicherplatzes auf einem Aufzeichnungsträger.**

(30) Priorität: **27.03.80 DE 3011810**

(43) Veröffentlichungstag der Anmeldung:
**14.10.81 Patentblatt 81/41**

(45) Bekanntmachung des Hinweises auf die Patenterteilung:
**27.12.84 Patentblatt 84/52**

(84) Benannte Vertragsstaaten:
**AT BE CH DE FR GB IT LI LU NL SE**

(56) Entgegenhaltungen:
**DE - A - 2 850 363**
**GB - A - 2 010 550**
**US - A - 4 000 510**

**PATENTS ABSTRACTS OF JAPAN, Band 3, Nr. 102, 29 August 1979, Seite 13 E 133**
**IBM TECHNICAL DISCLOSURE BULLETIN, Band 20, Nr. 4, September 1977, Seiten 1565-1566, New York, US, R. BAIRD: "Rapid access method for fixed block DASD records"**
**RESEARCH DISCLOSURE, Nr. 186, Oktober 1979, Aufsatz 18631, Seiten 568-570, Industrial Opportunities Ltd., Havant Hampshire, GB, D.G. HOWE et al.: "Document storage on a video disc"**
**SMPTE JOURNAL, Band 86, Februar 1977, Seiten 80-83, Scarsdale, US, M. MATHIEU: "A random access system**

(73) Patentinhaber: **Licentia Patent-Verwaltungs-GmbH, Theodor-Stern-Kai 1, D-6000 Frankfurt/Main 70 (DE)**

(72) Erfinder: **Henkes, Dieter, Göttinger Landstrasse 143, D-3005 Hemmingen 1 (DE)**

(74) Vertreter: **Einsel, Robert, Dipl.-Ing., Theodor-Stern-Kai 1, D-6000 Frankfurt/Main 70 (DE)**

(56) Entgegenhaltungen: (Fortsetzung)
**adapted for the optical videodisc: Its impact on information retrieval"**
**NEUES AUS DER TECHNIK, Jahrgang 1980, Nr. 1, 15 Februar, Seite 1, Aufsatz 558, Würzburg, DE, "Videoplatte mit zusätzlicher Information"**
**COMPUTER DESIGN, Band 10, Nr. 6, Juni 1971, Seiten 49-54, Concord, Mass., US, W.W. FARR et al.: "An optimal disc organisation for a virtual memory system"**
**FUNKSCHAU, Band 52, Heft 5, 29 Februar 1980, Seiten 61-63, München, DE, H.P. SIEBERT: "Magnavision, das erste marktfähige videoplattensystem"**

## Beschreibung

Die Erfindung geht aus von einem Verfahren, wie es in der älteren Anmeldung DE-A-2 939 912 beschrieben ist.

Die genannte ältere Anmeldung gibt ein Verfahren und ein Gerät zum Auffinden eines Speicherplatzes auf einem Informationsträger an, bei dem absoluten Adressen, die z.B. fortlaufend auf dem Informationsträger aufgezeichnet sind, codierte Adressen zugeordnet sind, die vom Bediener eines Abspielgerätes ausgewählt werden können, ohne dass die Angabe der absoluten Adresse erforderlich ist. Die ältere Anmeldung gibt ausserdem an, dass eine Zuordnungstabelle zur Zuordnung der codierten Adressen zu den absoluten Adressen an einem Ort des Aufzeichnungsträgers zusammenhängend aufgezeichnet und in einem Abspielgerät in einen Speicher eingelesen wird.

Zum Aufsuchen eines bestimmten Speicherplatzes auf dem Informationsträger ist es nach der älteren Anmeldung DE-A-2 939 912 erforderlich, zunächst die Zuordnungstabelle zu finden und auszulesen. Sobald dies erfolgt ist, kann der Abtaster aus der Zuordnung erkennen, welchen Ort er aufzusuchen hat. Da die Zuordnungstabelle nur einmal aufgezeichnet ist, muss diese entweder in einen Speicher eingelesen werden, oder vor jedem neuen Suchvorgang der Abtaster zum Ort der Zuordnungstabelle auf dem Aufzeichnungsträger zurückgehen, um zu erkennen, welcher zu findenden absoluten Adresse die bekannte codierte Adresse entspricht. Die hohe Datenrate einer Dichtspeicheraufzeichnung zwingt zur Benutzung schneller Speicher und schneller Speicher-Steuerungen und steht einer rationellen Lösung (langsamer Speicher und Steuerung durch Mikroprozessor o.ä.) im Wege.

Es hat sich gezeigt, dass unter bestimmten Umständen die Aufzeichnung auf dem Aufzeichnungsträger gerade an der Stelle gestört sein kann, an der die Zuordnungstabelle aufgezeichnet ist. Da diese Tabelle nur einmal am Anfang oder Ende der Aufzeichnung aufgezeichnet ist, kann es passieren, dass die Zuordnungstabelle daher nicht mehr korrekt abgespielt werden kann und damit wertlos wird.

Aus der Zeitschrift «Funkschau» 1980, Heft 5, Seite 62 ist es bekannt, die Bildadresse einer Bildplatte in jeder Spur zweifach in gegenüberliegenden Spuren zu speichern. Hierdurch ist gewährleistet, dass ein Speicherplatz auch dann noch eindeutig erkennbar ist, wenn eine der beiden Speicherplatzadressen gestört ist.

Es ist Aufgabe der Erfindung, ein Verfahren und ein Gerät zum Auffinden eines Speicherplatzes auf einem Aufzeichnungsträger anzugeben, das in der Lage ist, einen schnellen Zugriff zu einem gesuchten Speicherplatz zu gewährleisten und unempfindlich gegen Störungen des Signals auf dem Aufzeichnungsträger ist.

Die Aufgabe wird durch die im Anspruch 1 oder 11 angegebenen Merkmale gelöst. Weitergehende Massnahmen nach der Erfindung sind in den Unteransprüchen beschrieben.

In ähnlichem Zusammenhang ist aus «SMPT Journal», Februar 1977, Volume 86, Seiten 80–83 bekannt, dass Sektoren einer Bildplatte jeweils die Aufzeichnung eines Teilstückes eines hierarchisch aufgebauten Inhaltsverzeichnisses enthalten, das Begriffen Spuradressen zuordnet, so dass stufenweise durch gezielten Abgriff der einzelnen Ebenen des Inhaltsverzeichnisses eine absolute Adresse auffindbar ist. Dabei ist die Suche jeweils von einer bestimmten Spur entsprechend eines übergeordneten Begriffs zu beginnen.

Die Verwendung einer kontinuierlichen Aufzeichnung der Zuordnungstabelle war nicht ohne weiteres aus dem Stand der Technik ableitbar. In der älteren Anmeldung P 2 939 921 ist kein Hinweis auf die Erfindung enthalten. Der Stand der Technik gibt keine Anregungen auf die Erfindung.

Durch die Erfindung wird es ermöglicht, dass der Abtaster eines Abspielgerätes sich an einer beliebigen Stelle des Aufzeichnungsträgers befinden kann und jederzeit ohne Suchvorgang nach der Zuordnungstabelle in der Lage ist, aus der sofort aufzufindenden Zuordnungstabelle einen anderen gewünschten Speicherplatz anzusteuern. Es ist kein Speicher erforderlich, um die Zuordnungstabelle festzuhalten. Sollte einmal an einer Stelle eine Zuordnungstabelle gestört sein, so ist eine Auswerteschaltung vorhanden, die die Störung erkennt und nur eine folgende ungestörte Zuordnungstabelle akzeptiert.

Die Erfindung wird nachstehend an Hand eines Ausführungsbeispiels näher beschrieben.

In der Figur ist eine Anordnung einer Zuordnungstabelle 10 in Lücken einer Informationsaufzeichnung 5 angegeben.

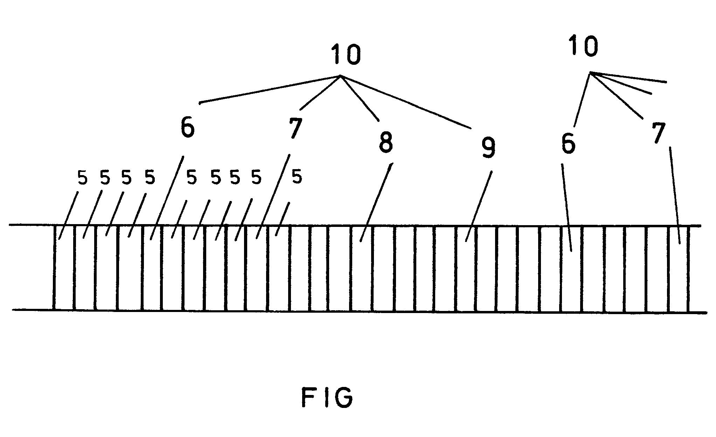

Zwischen den einzelnen Datenwörtern 5 befinden sich die Teile 6 bis 9 der Zuordnungstabelle 10. Es ist also jeweils nur ein Teil der Zuordnungstabelle zwischen den Datenwörtern verschachtelt. Z.B. kann, wie in Fig. 2 dargestellt, jedes fünfte Datenwort zu einer Zuordnungstabelle zugerechnet werden. Eine Auswerteschaltung im Abspielgerät sorgt dafür, dass dann jedes fünfte Datenwort aus der Signalaufzeichnung herausgenommen wird und als Teil der Zuordnungstabelle 10 betrachtet wird. Sobald alle Teile der Zuordnungstabelle 6 bis 9 vorhanden sind, beginnt die Zuordnungstabelle von neuem. Auf dem gesamten Aufzeichnungsträger ist daher die Zuordnungstabelle vielfach enthalten, und sie kann an jeder Stelle abgegriffen werden. Da die Zuordnungstabelle über einen grösseren Bereich der Aufzeichnung vorhanden ist, hat das letztgenannte Aufzeichnungsverfahren den Vorteil, dass die mittlere Datenrate verringert ist und kleinere Lücken im Datenstrom der Information entstehen.

Eine noch feinere Aufzeichnung der Zuordnungstabelle ist zu erreichen, wenn statt eines Teiles der Zuordnungstabelle nach einer gewissen Zahl von Datenwörtern am Ende eines jeden Datenwortes ein Bit der Zuordnungstabelle dem Datenwort angehängt wird. Hiermit entsteht eine gewünschte niedrige Datenrate für die Übermittlung der Zuordnungstabelle.

Durch die Erfindung entfällt ein gesondertes Aufsuchen der Tabelle sowie ein Zwischenspeichern der gesamten Tabelle. An welcher Stelle des Informationsträgers auch immer sich gerade der Abtaster befindet, er kann innerhalb kurzer Zeit, z. B. eine Sekunde, die Information lesen, die notwendig ist, einen Suchbefehl auszuführen. Das Lesen der Zuordnungstabelle kann gleichzeitig mit der Wiedergabe des letzten Informationsblocks erfolgen.

Sollten Daten der Zuordnungstabelle verfälscht sein, so kann das zu einem Fehlverhalten des Abspielgerätes führen. Dies wird dadurch vermieden, dass Fehler erkannt werden, z. B. durch Verwendung eines fehlererkennenden Codes oder Vergleich zweier aufeinanderfolgender Zuordnungstabellen. Eine Fehlererkennung ist schaltungstechnisch gegenüber einer Fehlerkorrektur, die bei einer einmaligen Aufzeichnung der Zuordnungstabelle erforderlich wäre, sehr viel einfacher zu realisieren. Die gestörten Daten werden einfach ausgeblendet. Allerdings ergibt sich dadurch eine etwas verlängerte Suchzeit der Zuordnungstabelle. Da diese aber innerhalb eines kurzen Zeitraumes von etwa einer Sekunde wiederholt wird, ist es für den Bediener eines Gerätes nicht merkbar. Gegenüber einer einmaligen Aufzeichnung der Zuordnungstabelle ergibt sich auch der Vorteil, dass der Abtaster an beliebiger Stelle aufgesetzt werden kann und sofort in einen Suchvorgang eintreten kann, ohne dass er zunächst die Zuordnungstabelle zu suchen hat. Es ergibt sich eine verbesserte Bedienung und erhöhte Störsicherheit.

**Patentansprüche**

1. Verfahren zum Auffinden eines gewünschten durch eine absolute Adresse gekennzeichneten Speicherplatzes auf einem Aufzeichnungsträger, insbesondere auf einer Bild- oder Tonplatte in digitaler Dichtspeichertechnik, entsprechend einer von einer Bedieneinheit angewählten codierten Adresse mit Hilfe einer codierten Adressen absolute Adressen zuordnenden Zuordnungstabelle und einer die Eingabeinformation mit der Zuordnungstabelle vergleichenden Verknüpfungsschaltung, gekennzeichnet durch die Verwendung eines Aufzeichnungsträgers, der in der aus Datenworten bestehenden Informationsaufzeichnung Lücken aufweist und auf den in aufeinanderfolgenden Lücken Teilstücke der Zuordnungstabelle aufgezeichnet sind und die gesamte Zuordnungstabelle in ständiger Wiederholung aufgezeichnet ist, so dass die Verknüpfungsschaltung an beliebiger Stelle des Aufzeichnungsträgers in kurzer Zeit in der Lage ist, den Abtaster zum Aufsuchen der gewünschten Speicherstelle zu veranlassen.

2. Verfahren nach Anspruch 1, dadurch gekennzeichnet, dass in den Lücken der Informationsaufzeichnung (5) ein Bit der Zuordnungstabelle (10) eingefügt ist.

3. Verfahren nach Anspruch 1 und 2, dadurch gekennzeichnet, dass das Lesen der Zuordnungstabelle (10) mit der Wiedergabe erfolgt.

4. Verfahren nach Anspruch 1 und 2, dadurch gekennzeichnet, dass die Zuordnungstabelle (10) in gleichen Zeitabständen wiederholt wird.

5. Verfahren nach Anspruch 1 und 2, dadurch gekennzeichnet, dass die Zuordnungstabelle (10) in gleichen räumlichen Abständen auf dem Informationsträger wiederholt aufgezeichnet ist.

6. Verfahren nach Anspruch 1, dadurch gekennzeichnet, dass eine Auswerteschaltung vorhanden ist, die gestörte Zuordnungstabellen (10) erkennt und mit anderen Zuordnungstabellen (10) vergleicht.

7. Verfahren nach Anspruch 1, dadurch gekennzeichnet, dass während der Abtastung einer Zuordnungstabelle (10) der Wiedergabekanal gesperrt ist.

8. Verfahren nach Anspruch 1, dadurch gekennzeichnet, dass zur Erkennung einer gestörten Zuordnungstabelle (10) ein an sich bekannter fehlererkennender Code verwendet wird.

9. Verfahren nach Anspruch 1 und 2, dadurch gekennzeichnet, dass die Zuordnungstabelle (10) in der Grössenordnung von einer Sekunde wiederholt wird.

10. Verfahren nach Anspruch 1, dadurch gekennzeichnet, dass die Zuordnungstabelle (10) Daten enthält, welche die vom Beginn des Aufzeichnungsträgers vergangene Zeit, die die absolute Adresse darstellt, eine codierte Adresse, z. B. Nummer des Titels, zuordnet.

11. Gerät zum Auffinden eines gewünschten durch eine absolute Adresse gekennzeichneten Speicherplatzes auf einem Aufzeichnungsträger, insbesondere auf einer Bild- oder Tonplatte in digitaler Dichtspeichertechnik, entsprechend einer von einer Bedieneinheit angewählten codierten Adresse mit Hilfe einer codierten Adressen absolute Adressen zuordnenden Zuordnungstabelle und einer die Eingabeinformation mit der Zuordnungstabelle vergleichenden Verknüpfungsschaltung, gekennzeichnet durch die Verwendung eines Aufzeichnungsträgers, der in der aus Datenworten bestehenden Informationsaufzeichnung Lücken aufweist und auf den in aufeinanderfolgenden Lücken Teilstücke der Zuordnungstabelle aufgezeichnet sind und die gesamte Zuordnungstabelle in ständiger Wiederholung aufgezeichnet ist, so dass die Verknüpfungsschaltung an beliebiger Stelle des Aufzeichnungsträgers in kurzer Zeit in der Lage ist, den Abtaster zum Aufsuchen der gewünschten Speicherstelle zu veranlassen.

12. Gerät nach Anspruch 11 mit den kennzeichnenden Merkmalen nach einem der Ansprüche 2–10.

**Claims**

1. Method for searching on a record medium for a desired storage location identified by an absolute address, especially on a picture or sound plate using digital high density storage technology, in response to a coded address selected by a user, with the aid of a correlation table associating coded addresses and absolute addresses and of a connecting circuit identifying the input information with the correlation table, characterized by the utilisation of a record medium which displays gaps in the information recording of data words and on which parts of the correlation table are recorded in successive gaps, and the entire correlation table is recorded in regularly recurrent manner so that, whatever the situation of the record medium, the connecting circuit is in the position, in a short time, to enable the pick up to search for the desired storage location.

2. Method according to Claim 1, characterized in that one bit of the correlation table (10) is inserted in the gaps of the information recording (5).

3. Method according to Claim 1 and 2, characterized in that the reading of the correlation table occurs along with the reproduction.

4. Method according to Claim 1 and 2, characterized in that the correlation table (10) is repeated at equal time intervals.

5. Method according to Claim 1 and 2, characterized in that the correlation table (10) is repeatedly recorded on the information carrier with equal spatial separations.

6. Method according to Claim 1, characterized in that an evaluating circuit is provided which recognises distorted correlation tables (10) and makes a reconciliation by reference to other correlation tables.

7. Method according to Claim 1, characterized in that during the sampling of a correlation table (10) the reproduction channel is closed.

8. Method according to Claim 1, characterized in that an error recognition code, known per se, is used for the recognition of a distorted correlation table (10).

9. Method according to Claim 1 and 2, characterized in that the correlation table (10) is repeated at around once per second.

10. Method according to Claim 1, characterized in that the correlation table (10) contains data which correlates the elapsed time from the beginning of the record medium, which represents the absolute address, with a coded address, e.g. number of the title.

11. Apparatus for searching, on a record medium, for a desired storage location identified by an absolute address, especially on a picture or sound plate using digital high density storage technology, in response to a coded address selected by a user, with the aid of a correlation table associating coded addresses and absolute addresses and of a connecting circuit identifying the input information with the correlation table, characterized by the utilisation of a record medium which displays gaps in the information recording of data words and on which parts of the correlation table are recorded in successive gaps and the entire correlation table is recorded in regularly recurrent manner, so that, whatever the situation of the record medium, the connecting circuit is in the position in a short time to enable the pick up to search for the desired storage location.

12. Apparatus according to Claim 11, having the characteristic features according to any of the Claims 2–10.

**Revendications**

1. Procédé pour la localisation d'un emplacement de mémoire repéré par une adresse absolue sur un support d'enregistrement, et en particulier sur un vidéodisque ou un audiodisque numérique à haute densité, en fonction d'une adresse codée sélectée par une unité de commande à l'aide d'une table d'allocation d'adresses absolues à des adresses codées et d'un circuit combinatoire comparant l'information d'entrée à la table d'allocation, ledit procédé étant caractérisé par l'utilisation d'un support sur lequel l'enregistrement de l'information constituée par des mots de données présente des intervalles, des parties de la table d'allocation sont enregistrée dans des intervalles successifs et l'ensemble de la table d'allocation est enregistré de façon répétée, de sorte que le circuit combinatoire est à même rapidement, et en un point quelconque du support d'enregistrement, de déclencher la recherche par le lecteur de l'emplacement de mémoire souhaité.

2. Procédé selon revendication 1, caractérisé par l'insertion d'un bit de la table d'allocation (10) dans les intervalles de l'enregistrement d'information (5).

3. Procédé selon revendications 1 et 2, caractérisé en ce que la lecture de la table d'allocation (10) s'effectue avec la lecture de l'enregistrement.

4. Procédé selon revendications 1 et 2, caractérisé en ce que la table d'allocation (10) se répète à des intervalles de temps égaux.

5. Procédé selon revendications 1 et 2, caractérisé par l'enregistrement répété de la table d'allocation (10) à des distances égales sur le support d'information.

6. Procédé selon revendication 1, caractérisé par un circuit traducteur, qui décèle les tables d'allocation (10) perturbées et les compare à d'autres tables d'allocation (10).

7. Procédé selon revendication 1, caractérisé par le blocage de la voie de lecture pendant la lecture d'une table d'allocation (10).

8. Procédé selon revendication 1, caractérisé par l'emploi d'un code détecteur d'erreurs connu pour la détection d'une table d'allocation (10) perturbée.

9. Procédé selon revendications 1 et 2, caractérisé par la répétition de la table d'allocation (10) toutes les secondes environ.

10. Procédé selon revendication 1, caractérisé en ce que la table d'allocation (10) contient des données qui allouent le temps écoulé depuis le début du support d'enregistrement et représentant l'adresse absolue à une adresse codée, telle que le numéro du titre.

11. Appareil pour la localisation d'un emplacement de mémoire repéré par une adresse absolue sur un support d'enregistrement, et en particulier sur un vidéodisque ou un audiodisque numérique à haute densité, en fonction d'une adresse codée sélectée par une unité de commande à l'aide d'une table d'allocation d'adresses absolues à des adresses codées et d'un circuit combinatoire comparant l'information d'entrée à la table d'allocation, ledit appareil étant caractérisé par l'utilisation d'un support sur lequel l'enregistrement de l'information constituée par des mots de données présente des intervalles successifs et l'ensemble de la table d'allocation est enregistré de façon répétée, de sorte que le circuit combinatoire est à même rapidement, et en un point quelconque du support d'enregistrement, de déclencher la recherche par le lecteur de l'emplacement de mémoire souhaité.

12. Appareil selon revendication 11, caractérisé par la partie caractéristique d'une quelconque des revendications 2 à 10.

FIG